(19) **Europäisches Patentamt**
**European Patent Office**
**Office européen des brevets**

(11) **EP 2 400 705 B1**

(12) **EUROPEAN PATENT SPECIFICATION**

(45) Date of publication and mention
of the grant of the patent:
**05.03.2014 Bulletin 2014/10**

(51) Int Cl.:
**H04L 25/03** *(2006.01)*

(21) Application number: **11005030.9**

(22) Date of filing: **21.06.2011**

(54) **Multiple-input multiple-output systems and methods for wireless communication thereof for reducing the quantization effect of precoding operations utilizing finite codebooks**

MIMO-Systeme und Verfahren für drahtlose Kommunikation zur Verringerung des Quantisierungseffekts von Vorkodierungsvorgängen unter Verwendung von endlichen Codebüchern

Systèmes à entrées et sorties multiples et procédé pour leur communication sans fil pour réduire l'effet de quantification des opérations de précodage au moyen de guides de codification finis

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2010 US 357106 P**
**10.02.2011 US 201113024762**

(43) Date of publication of application:
**28.12.2011 Bulletin 2011/52**

(73) Proprietor: **HTC Corporation**
**Taoyuan County**
**330 (TW)**

(72) Inventors:
• **Jen, Yu-Chih**
**Taoyuan City**
**Taoyuan County 330**
**(TW)**
• **Yeh, Ping-Cheng**
**Taoyuan City**
**Taoyuan County 330**
**(TW)**
• **Meng, Ling-San**
**Taoyuan City**
**Taoyuan County 330**
**(TW)**
• **Lan, Pang-Chang**
**Taoyuan City**
**Taoyuan County 330**
**(TW)**
• **Wu, Chih-Yao**
**Taoyuan City**
**Taoyuan County 330**
**(TW)**

(74) Representative: **Wimmer, Hubert et al**
**WAGNER & GEYER**
**Gewürzmühlstrasse 5**
**80538 München (DE)**

(56) References cited:
**WO-A1-2009/132601**

• **HTC CORPORATION: "Enhanced PMI Indication for Refining MIMO Precoder Codebook", 3GPP DRAFT; R1-101009, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 17 February 2010 (2010-02-17), XP050418975, [retrieved on 2010-02-17]**

**Description**

**BACKGROUND OF THE INVENTION**

**Field of the Invention**

The invention generally relates to wireless communication systems and methods thereof, and more particularly, to methods for wireless communication for reducing the quantization effect of precoding operations utilizing finite codebooks in multiple-input multiple-output (MIMO) or multiple-input single-output (MISO) systems from a transmitter to a receiver.

**Description of the Related Art**

In wireless communications, multiple-input and multiple-output (MIMO) technology involves the use of multiple antennas at both the transmitter and receiver sides to improve communication performance. MIMO technology offers significant increases in data throughput and link ranges without additional bandwidth or transmit power via higher spectral efficiency and link reliability or diversity. One of the common functions in MIMO technology is precoding, which is a signal processing technique for MIMO communications to exploit the knowledge of the information of the downlink channel quality at the transmitter side. With precoding, the transmitter can transform signals using appropriate precoding matrices and perform power allocation adaptively according to the variation of link quality. It has been shown that precoding can substantially improve the spectral efficiency for MIMO communications.

Precoding is an effective technique improving the performance of MIMO-OFDM systems. In practical systems, the precoding matrices are pre-determined and only the index of the selected matrix is fed back.

Depending on the adopted criteria for assessing link performance, different objective functions exist for the computation of the optimal precoding matrix. For example, the minimum square error (MSE) and the achieved link capacity are two commonly adopted performance measures.

For the operation of precoding in MIMO communication systems, the information of the downlink channel quality generally has to be fed back from the receiver to the transmitter side. In general, precoding may require knowledge of channel state information (CSI) at the transmitter side. To achieve the optimal performance, the full information of the downlink channel quality or the optimal precoding matrix computed by the receiver has to be fed back to the transmitter side. Such signaling process incurs considerable overhead which scales with the number of antennas, i.e., the MIMO mode, and is undesirable in most cases. In current MIMO systems, the approach of codebook-based precoding is adopted to reduce feedback overhead. In codebook-based precoding, a number of selected precoding matrices are known to both the transmitter side and receiver side prior to the transmissions. The receiver simply feeds back the index of the most preferred precoding matrix which yields the best performance based on the measured link quality and the objective function to the transmitter via the feedback channel. For example, if the number of precoding matrices is set to $2^n$, the length of the feedback can be $n$ bits. Codebook-based precoding can substantially reduce the feedback overhead.

Ideally, the size of the codebook should be made as small as possible to reduce receiver complexity and the feedback overhead. However, the link performance is degraded with a small codebook size as the quantization error for the optimal precoding matrix increases in this case. Precoding gain in MIMO systems can be increased by increasing the size of the codebook. However, at the same time the complexity of codeword selection and memory requirements increase exponentially with the number of bits. A tradeoff thus exists when designing the precoder codebook. The approach of utilizing multiple finite-sized codebooks has been proposed. In the multiple-codebook approach, the receiver may feed back the indices of the preferred precoding matrices for each of the adopted codebooks. The transmitter may then construct the precoding matrix by multiplying the precoding matrices indicated by the receiver. However, such multiple-codebook approaches involve the effort of designing and storing new codebooks at both the transmitter and the receiver sides, and still suffer from inevitable quantization errors as the possible choices of the precoders are limited by the product of the respective codebook sizes. Furthermore, the consequence of feedback error corresponding to the codebooks of relatively long feedback periods could severely degrade system performance (e.g., propagation error).

WO 2009/132601 A discloses a system and method for progressively quantizing channel state information for application in a MIMO (multiple input multiple output) communication system. A method includes computing an estimate of a communications channel between a subscriber unit and a base station, quantizing the estimate with a first codebook, thereby producing a first quantized estimate, quantizing an (n-1)-th quantized estimate with an n-th codebook, thereby producing an n-th quantized estimate, where n is an integer value ranging from 2 to R, R is a total number of quantizations of the estimate, wherein the n-th codebook is a localized codebook. The method also includes incrementing n, repeating the quantizing an (n-1)-th quantized estimate until n = R, and transmitting information based on the R quantized estimates to the base station.

HTC Corporation: "Enhanced PMI Indication for Refining MIMO Precoder Codebook", 3GPP Draft, R1-101009, 3RD GENERATION PARTNERSHIP PROJECT (3GPP), MOBILE COMPETENCE CENTRE, 650 ROUTE DE LUCIOLES, F-06921 SOPHIA-ANTIPOLIS CEDX, FRANCE; RAN WG1, San Francisco , USA; 17 February 2010 proposed an enhanced PMI feedback scheme by allowing UEs to fee back multiple PMIs using the original codebook along with some auxiliary information related to the geometric structure among the precoding matrices. Such auxiliary information comprises a set of scalar coefficients which can be computed using defined equations or be numerically searched. A refined precoder with higher resolution can then be constructed at the eNB for generating precoded signals.

## BRIEF SUMMARY OF THE INVENTION

According to the present invention, there is provided a method for wireless communication in a multiple-input multiple-output (MIMO) system between a transmitter and a receiver, as set forth in claim 1. Also provided is a MIMO system as set forth in claim 12 and a receiver as set forth in claim 15. Preferred embodiments of the present invention may be gathered from the dependent claims.

Other aspects and features of the present invention will become apparent to those with ordinarily skill in the art upon review of the following descriptions of specific embodiments.

## BRIEF DESCRIPTION OF DRAWINGS

The invention can be more fully understood by reading the subsequent detailed description and examples with references made to the accompanying drawings, wherein:

Fig. 1 is a block diagram illustrating a wireless communications system according to an embodiment of the invention;
Fig. 2 is a flow chart illustrating a method for reducing the quantization effect of precoding operations utilizing a finite codebook in MIMO or multiple-input single-output (MISO) systems from a transmitter to a receiver according to an embodiment of the invention;
Fig. 3 is a schematic illustrating an example for determining one or more scalar coefficients in the precoding operations based on a set of indices of precoding matrices within the finite codebook and generating a refined precoding matrix based on the set of indices of precoding matrices and the one or more scalar coefficients according to another embodiment of the invention; and
Fig. 4 is a flow chart illustrating a method for reducing the quantization effect of precoding operations utilizing at least two finite codebooks in MIMO systems from a transmitter to a receiver according to another embodiment of the invention.

## DETAILED DESCRIPTION OF THE INVENTION

The following description is of the best-contemplated mode of carrying out the invention. This description is made for the purpose of illustrating the general principles of the invention and should not be taken in a limiting sense.

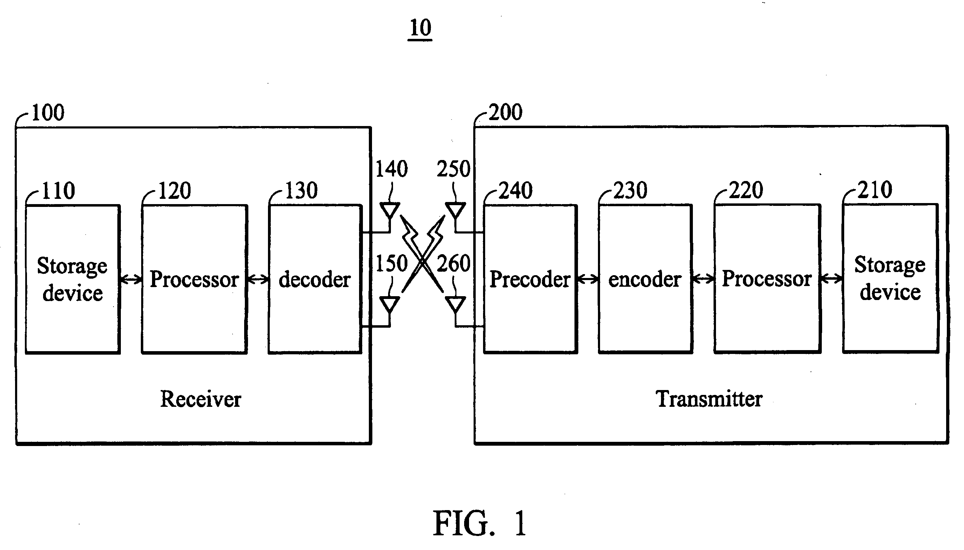

Fig. 1 is a block diagram illustrating a wireless communications system according to an embodiment of the invention. Particularly, the wireless communications system 10 is a multiple-input multiple-output (MIMO) system and comprises at least a transmitter 200 and a receiver 100. The receiver 100 is wirelessly connected to the transmitter 200 for obtaining wireless services. Generally, the transmitter 200 may be a network/base station, a user equipment (UE) or a mobile station while the receiver 100 may be a UE, a mobile station or a network/base station. For example, the receiver 100 may be a mobile station and the transmitter 200 may be its serving base station. For downlink (DL) transmission, signals are transmitted from the transmitter 200 to the receiver 100. On the transmitter side, the transmitter 200 (e.g., a base station) may comprise a storage device 210, a processor 220, a multiple-input multiple-output (MIMO) encoder 230 that encodes MIMO signals, a precoder 240 for performing precoding operations to precode the encoded signals and multiple antennas 250 and 260. On the receiver side, the receiver 100 may comprise a storage device 110, a processor 120, an MIMO decoder 130 that decodes MIMO signals and multiple antennas 140 and 150.

It is to be noted that, for the precoding operation, the information of the downlink channel quality (e.g. the channel state information (CSI)) has to be fed back from the receiver 100 to the transmitter 200 in the form of limited quantized feedback, where the quantization points may be referred to as precoding codewords or precoding matrices and the set of codewords or precoding matrices form a precoding codebook. The precoding codebook may be predefined in the storage device 210 or configurable by the transmitter 200. The precoding codebook may be broadcasted by the transmitter 200 or the receiver 100 through, for example, system information, but it is not limited thereto. The storage device 110 of the receiver 100 may also store a precoding codebook with a set of predefined codewords or precoding matrices as same as those predefined in the storage device 210.

The receiver 100 may then transmit a set of indices of precoding matrices or a set of precoding matrices and one or more scalar coefficient(s) to the transmitter 200 through data signaling or control signaling.

In some embodiments, the precoding codebook may be transmitter specific or receiver specific. In one embodiment, the transmitter 200 and/or the receiver 100 may further be configured in a specific transmission mode for applying precoding operations of the invention.

The transmitter 200 may receive the set of indices of precoding matrices and one or more scalar coefficients from the receiver 100 and generate a refined precoding matrix that is to be combined with a data signal and apply the refined precoding matrix for transmission, e.g. to precode the data signal according to the set of indices of precoding matrices and the one or more scalar coefficients. For example, in one embodiment, the transmitter 200 may obtain a set of precoding matrices from a finite codebook according to the set of indices of precoding matrices and apply a specific mathematics method with obtained precoding matrices and the one or more scalar coefficients, such as by interpolating between the obtained precoding matrices using the one or more scalar coefficients, to generate the refined precoding matrix. In some embodiments, the transmitter 200 may also generate the refined precoding matrix based on channel condition, transmission power, or other information regarding the receiver 100.

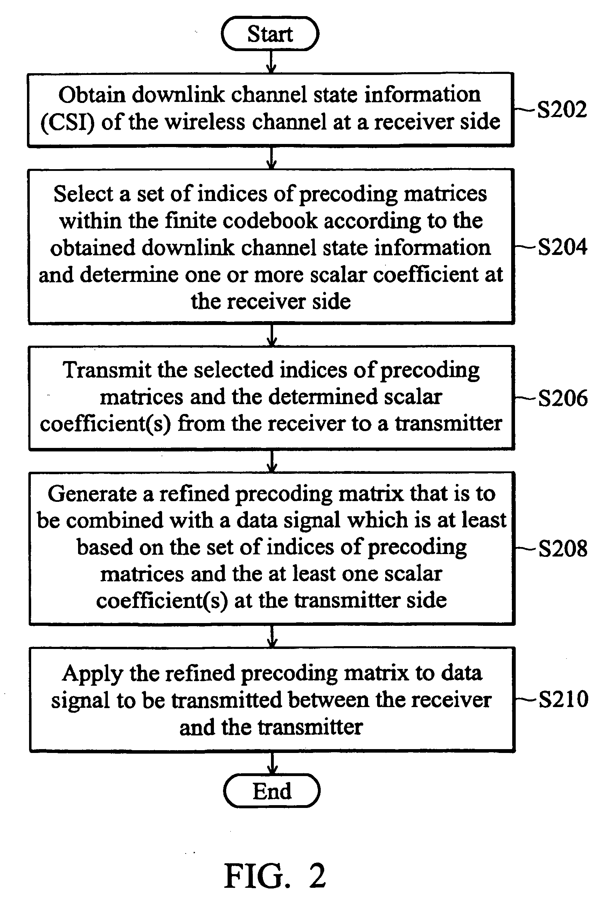

Fig. 2 is a flow chart illustrating a method for reducing the quantization effect of precoding operations utilizing a finite codebook in MIMO systems from a transmitter to a receiver according to an embodiment of the invention. The method can be applied to an MIMO wireless communication system as shown in Fig.1. In this embodiment, the receiver 100 is wirelessly connected to the transmitter 200 which initiates a precoding operation via a wireless channel. First, in step S202, the receiver 100 obtains downlink channel state information (CSI) about the wireless channel via the decoder 130. After obtaining the downlink channel state information, in step S204, the receiver 100 selects a set of precoding matrix indices within the finite codebook according to the obtained downlink channel state information and determines the one or more scalar coefficients based on the set of precoding matrix indices. Note that the receiver 100 may select a number of precoding matrix indices within the finite codebook. For example, the receiver 100 may select two precoding matrix indices within the finite codebook which are the indices of the best and second best matrices among the precoding matrices.

After the set of indices of precoding matrices has been selected and the one or more scalar coefficients has been determined, in step S206, the receiver 100 transmits the selected indices of precoding matrices and the determined scalar coefficient(s) to the transmitter 200 via the decoder 130. Upon reception of the set of selected indices of precoding matrices and the determined scalar coefficient(s), in step S208, the transmitter 200 generates a refined precoding matrix that is to be combined with a data signal which is at least based on the set of indices of precoding matrices and the one or more scalar coefficients. After the refined precoding matrix has been generated, in step S210, the transmitter 200 applies the refined precoding matrix to data signals to be transmitted between the receiver 100 and the transmitter 200, e.g. to precode the data signals.

The one or more scalar coefficient may be determined based on the set of precoding matrix indices or the set of precoding matrices. In one embodiment, the set of precoding matrix indices or the set of precoding matrices may form a subspace and the one or more scalar coefficient(s) may be obtained by computing the projection of the optimal precoding matrix onto the subspace spanned by the set of precoding matrix indices or the set of precoding matrices. The distance between the precoding matrices such as the chordal distance, the projection 2-norm distance or the Fubini-Study distance may be applied to obtain the projection.

In some embodiments, the one or more scalar coefficients may be obtained by directly performing a numerical search such that the matrix distance between the precoding matrices and the optimal precoding matrix is minimized.

Because the refined precoding matrix is newly generated and expected to reduce quantization error, the refined precoding matrix introduces less quantization effect as compared with any single precoding matrix within the codebook.

It is to be noted that the number of indices of precoding matrices or precoding matrices for the set of indices of precoding matrices or precoding matrices is at least one. The one or more scalar coefficients may be represented by a field of a fixed size in the data signaling or control signaling format. In some embodiments, there may be a field in the data signaling or control signaling format to indicate the number of indices of precoding matrices or precoding matrices for the set of indices of precoding matrices or precoding matrices. Similarly, in some embodiments, there may be a field in the data signaling or control signaling format to indicate the number of scalar coefficients. In some embodiments, the number of indices of precoding matrices or precoding matrices for the set of indices of precoding matrices or precoding matrices and the number of scalar coefficients for the scalar coefficients are predefined.

For explanation, one specific embodiment is illustrated in the following to explain the detailed process of a method for multi-user detection of the invention, and those skilled in the art will understand that this specific embodiment is used for explanation only and the invention is not limited thereto.

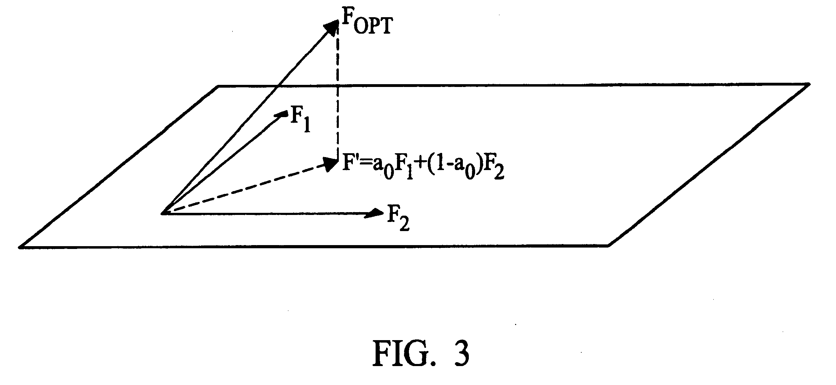

Fig. 3 is a schematic illustrating an example for determining one or more scalar coefficients in the precoding operations based on a set of indices of precoding matrices within the finite codebook and generating a refined precoding matrix based on the set of indices of precoding matrices and the one or more scalar coefficients according to another embodiment of the invention. Please refer to Fig. 3. In this embodiment, two precoding matrix indices along with one coefficient are provided to the transmitter 200 for generating a refined precoding matrix. In Fig. 3, for a particular channel realization and performance criterion, the best and the second-best precoding matrices within a given codebook can be determined and denoted by $F_1$ and $F_2$ respectively. Further, the optimal precoding matrix corresponding to the aforementioned channel realization and performance criterion is denoted by $F_{opt}$. The optimal precoding matrix $F_{opt}$ may be determined by, for example, the minimum square error (MSE) or the achieved link capacity measurement for all of the precoding matrices within the given codebook. The coefficient, denoted by $a_0$, can be thus determined by the following formula:

$$a_0 = \mathrm{argmin}_a \, d \, ( \, F_{opt}, \, a \, F_1 + (1\text{-}a) \, F_2 \, ) \quad \dots\dots\dots\dots\dots\dots\dots(2),$$

where $d()$ calculates the distance between two matrices and where $a$ is a parameter ranged from 0 to 1 for determining whether the matrix distance between the precoding matrices $F_1$ , $F_2$ and the optimal precoding matrix $F_{opt}$ is minimized. Based on the adopted performance criterion and the codebook design rule, different definitions of a matrix distance can be applied, e.g., the chordal, Fubini-Study or projection 2-norm distances. In one embodiment, the coefficient $a_0$ may also be obtained by computing the projection of the optimal precoding matrix $F_{opt}$ onto the subspace spanned by the set of indices of precoding matrices or the set of precoding matrices $F_1$ and $F_2$, wherein the matrix distance such as the chordal distance, the projection 2-norm distance or the Fubini-Study distance may be applied to obtain the projection.

By sending $F_1$, $F_2$, and $a_0$ to the transmitter 200, a refined precoding matrix $F'=a_0 F_1 + (1\text{-}a_0) F_2$ with less quantization effect as compared to the best precoding matrix $F_1$ within the codebook can be generated to precode data signals to be transmitted between the transmitter and the receiver.

In summary, according to the method for wireless communication in an MIMO system of the invention, the receiver is allowed to feed back multiple indices of the precoding matrices using a finite codebook along with some auxiliary information related to the geometric structure among the precoding matrices to the transmitter such that a refined precoding matrix which is expected to reduce the quantization error can be generated at the transmitter side, thus, reducing the quantization effect of precoding operations. Moreover, with the method for wireless communication in an MIMO system of the invention, the degree of freedom in generating precoding matrices and thus the quantization effect can be largely improved even with a small codebook.

In some embodiments, to further enhance performance, the receiver may perform a numerical search to find the optimal pair of precoding matrices such that the distance between $F_{opt}$ and the constructed refined precoding matrix is minimized.

In one embodiment, a method for reducing the quantization effect of precoding operations utilizing multiple finite codebooks in MIMO systems is further provided to support such multiple-codebook approaches.

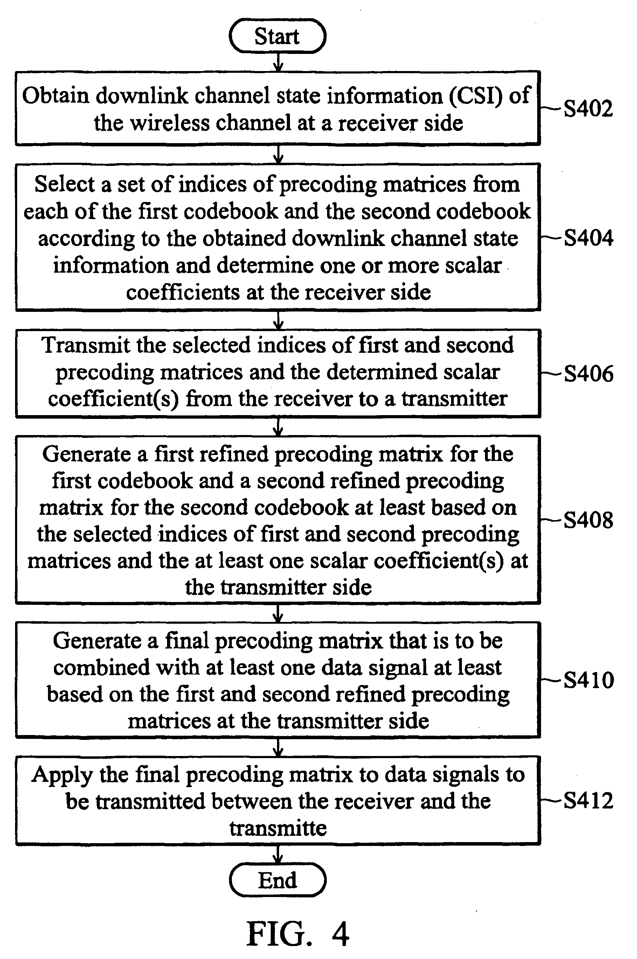

Fig. 4 is a flow chart illustrating a method for reducing the quantization effect of precoding operations utilizing at least two finite codebooks in MIMO systems from a transmitter to a receiver according to another embodiment of the invention. The method can also be applied to an MIMO wireless communication system as shown in Fig.1. Similarly, in this embodiment, the receiver 100 is wirelessly connected to the transmitter 200 which initiates a precoding operation via a wireless channel, and a first codebook and a second codebook are utilized. The first codebook comprises a number of first precoding matrices and the second codebook comprises a number of second precoding matrices.

First, in step S402, the receiver 100 obtains downlink channel state information (CSI) about the wireless channel via the decoder 130. After obtaining the downlink channel state information, in step S404, the receiver 100 selects a set of indices of precoding matrices from each of the first codebook and the second codebook according to the obtained downlink channel state information and determines one or more scalar coefficients via the decoder 130. Note that the receiver 100 may select a number of indices of precoding matrices within each codebook. For example, the receiver 100 may select two indices of the first precoding matrices within the first codebook which are the indices of the best and second best matrices among the first precoding matrices and select two indices of the second precoding matrices within the second codebook which are the indices of the best and second best matrices among the second precoding matrices. The one or more scalar coefficients may be determined based on the set of indices of precoding matrices or the set of precoding matrices. In one embodiment, the set of indices of precoding matrices or the set of precoding matrices may form a subspace and the one or more scalar coefficient(s) may be obtained by computing the projection of the optimal precoding matrix onto the subspace spanned by the set of indices of precoding matrices or the set of precoding matrices. The distance between the precoding matrices such as the chordal distance, the projection 2-norm distance or the Fubini-Study distance may be applied to obtain the projection. In some embodiments, the one or more scalar coefficients may also be obtained by directly performing a numerical search such that the matrix distance between the precoding matrices and the optimal precoding matrix is minimized. In one embodiment, the set of the at least one scalar coefficient(s) may be chosen such that the at least one final precoding matrix is equal to the precoding matrix computed using matrix operations, e.g., matrix product, with precoding matrices from the set of the at least one codebook. The set of the at least one scalar coefficient(s) may be, for example, a scalar coefficient, a scalar vector(s) or a scalar matrix (matrices) set, but it is not limited thereto.

After the set of indices of precoding matrices has been selected for each of the first and second codebooks and the one or more scalar coefficients has been determined, in step S406, the receiver 100 transmits the selected indices of the first and second precoding matrices and the determined scalar coefficient(s) to the transmitter 200 via the decoder 130. Upon reception of the set of selected indices of precoding matrices for each of the first and second codebooks and the determined scalar coefficient(s), in step S408, the transmitter 200 generates a first refined precoding matrix at least based on the set of indices of the first precoding matrices and the one or more scalar coefficients and a second refined precoding matrix at least based on the set of indices of the second precoding matrices and the one or more scalar coefficients and then generates, in step S410, a final precoding matrix that is to be combined with at least one data signal at least based on the first and the second refined precoding matrices. Because the final precoding matrix is newly generated and expected to reduce quantization error, the final precoding matrix introduces less quantization effect as compared with any single precoding matrix within each of the codebooks.

After the final precoding matrix has been generated, in step S412, the transmitter 200 applies the final precoding matrix to data signals to be transmitted between the receiver 100 and the transmitter 200, e.g. to precode the data signals.

In some embodiments, each of the first and second refined precoding matrices may be combined together using a matrix operation, e.g., matrix product, to obtain at least one final precoding matrix which is used to precode the at least one data signal. The matrix product may be, for example, a Kronecker product, a Frobenius inner product, a linear transformation of the matrix product operation and so on, but it is not limited thereto.

In some embodiments, the set of indices of precoding matrices or the set of precoding matrices may be taken from one or more precoding codebooks. It is to be noted that the number of indices of precoding matrices or precoding matrices for the set of indices of precoding matrices or precoding matrices is at least one. The one or more scalar coefficients may be represented by a field of a fixed size in a data signaling or control signaling format. In some embodiments, there may be a field in the data signaling or control signaling format to indicate the number of indices of precoding matrices or precoding matrices for the set of indices of precoding matrices or precoding matrices. Similarly, in some embodiments, there may be a field in the data signaling or control signaling format to indicate the number of scalar coefficients. In some embodiments, the number of indices of precoding matrices or precoding matrices for the set of indices of precoding matrices or precoding matrices and the number of scalar coefficients for the scalar coefficients are predefined.

In some embodiments, each of the precoding codebooks may be sent by the data signaling or control signaling during a specific period and the periods for sending the data signaling or control signaling may be different for different precoding codebooks.

In some embodiments, the set of the at least one index of precoding matrices or the set of the at least one precoding matrix may be chosen by performing a numerical search such that a predetermined performance metric is optimized.

The set of the at least one scalar coefficient(s) may be chosen such that the refined precoding matrix is equal to the matrix product of precoding matrices taken from a same or different codebooks. In one embodiment, the at least one refined precoding matrix may be constructed using the set of the at least one index of precoding matrices or the set of the at least one precoding matrix and the set of the at least one scalar coefficient(s) by performing linear operations, e.g., formula $W = a*C_1 + b*C_2$, where $W$ represents the refined precoding matrix; $C_1$ and $C_2$ represent the precoding matrices taken from the same precoding codebook; $a$ and $b$ represent the set of the at least one scalar coefficient(s), or the derivation of the set of the at least one scalar coefficient(s). For example, $a$ and $b$ may have the relationship that $b = 1 - a$, that is, $W = a*C_1 + (1-a)*C_2$. In one embodiment, the at least one refined precoding matrix may be constructed for each of the precoding codebook(s), e.g., formulas $W_1 = a*C_1+b*C_2$, and $W_2 = c*F_1+d*F_2$, where $F_1$ and $F_2$ represent precoding matrices taken from a different precoding codebook from that of $C_1$ and $C_2$; $c$ and $d$ represent the set of the at least one scalar coefficient(s), or the derivation of the set of the at least one scalar coefficient(s).

In another embodiment, the set of the at least one scalar coefficient(s) may be chosen such that the refined precoding matrix is equal to the matrix product of precoding matrices taken from different codebooks, e.g., formula $W = a*C_1+b*C_2 = C_3 - F_1$, where $C_3$ represents a precoding matrix taken from the same precoding codebook as that of $C_1$ and $C_2$ and $F_1$ represents a precoding matrix taken from a different codebook. For example, the formula $W = a*C_1+b*C_2 = C_3 \cdot F_1$ can have the relationship that $C_3 = C_1$ or $C_3 = C_2$. Similarly, it is to be noted that the matrix product may be, for example, a Kronecker product or a Frobenius inner product, or a linear transformation of the matrix product operation. In one embodiment, the precoding matrices taken from different codebooks for performing the matrix product operation may have at least one precoding matrix which is a diagonal matrix or an identity matrix. For example, in the formula $W = a*C_1+b*C_2 = C_3 \cdot F_1$ $F_1$ can be a diagonal or an identity matrix.

In some embodiments, the at least one refined precoding matrix $W_1$ and $W_2$ may be combined together using a matrix operation, e.g. a Kronecker product, a Frobenius inner product, or a linear transformation of the matrix product operation, to obtain the final precoding matrix $W_{final}$, e.g., formula $W_{final} = W_1 \cdot W_2$. In some embodiments, the at least one refined precoding matrix $W_1$ and $W_2$ can be combined together using the aforementioned matrix operation to obtain the final precoding matrix $W_{final}$, e.g., formula $W_{final} = e*W_{1+}f*W_1 = W_1 \cdot W_2$, where $e$ and $f$ represent the set of the at least one scalar coefficient(s) or the derivation of the one or more scalar coefficients.

Thus, with the method for wireless communication in an MIMO system of the invention, the receiver is also allowed to feed back multiple indices of the precoding matrices using multiple finite codebooks along with some auxiliary information related to the geometric structure among the precoding matrices to the transmitter such that a final precoding matrix which is expected to reduce quantization error can be generated according to at least one refined precoding matrix for each of the utilized codebooks at the transmitter side, thus, reducing the quantization effect of precoding operations and largely improving the degree of freedom in generating precoding matrices even with a small codebook.

Methods for wireless communication in an MIMO system and systems thereof, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope of the present invention as defined by the following claims.

**Claims**

1. A method for wireless communication in a multiple-input multiple-output, MIMO, system (10) between a transmitter (200) and a receiver (100), comprising:

   obtaining downlink channel state information at a receiver side (S402);
   selecting, for each of a plurality of codebooks, a set of indices of precoding matrices within codebooks according to the obtained downlink channel state information at the receiver side (S404);
   transmitting, for each of the plurality of codebooks, the selected set of indices of precoding matrices and one or more scalar coefficients, which are determined based on the selected set of indices of precoding matrices, from the receiver (100) to the transmitter (200) (S406);
   generating at least a first and a second refined precoding matrix at the transmitter side, each refined precoding matrix being generated based on a different selected set of indices of precoding matrices and the determined one or more scalar coefficients (S408);
   generating a final precoding matrix based on at least the first refined precoding matrix and the second refined precoding matrix at the transmitter side (S410); and
   applying the final precoding matrix to precode data signals to be transmitted from the transmitter (200) to the receiver (100) to reduce the quantization effect of precoding operations (S412).

2. The method of claim 1, **characterized in that** the step of generating the final precoding matrix further comprises generating the final precoding matrix by performing a specific matrix operation on the first refined precoding matrix and the second refined precoding matrix.

3. The method of claim 2, **characterized in that** the one or more scalar coefficients are chosen such that the final precoding matrix is equal to a precoding matrix computed using a matrix operation with precoding matrices from each of the finite codebooks.

4. The method of claim 1, **characterized in that** the first or the second refined precoding matrix is determined by the following formula:

$$W = a*C1 + b*C2,$$

where W represents the refined precoding matrix, C1 and C2 represent the set of precoding matrices taken from the same finite codebook, and a and b represent the scalar coefficients or a derivation of the scalar coefficients.

5. The method of claim 4, **characterized in that** the one or more scalar coefficients are chosen such that the first or the second refined precoding matrix is equal to the matrix product of precoding matrices taken from different finite codebooks and is determined by the following formula:

$$W = a*C1 + b*C2 = C3 \cdot F1,$$

where C3 represents a precoding matrix taken from the same finite codebook as that of C1 and C2, and F1 represents a precoding matrix taken from a different finite codebook.

6. The method of claim 5, **characterized in that** C3 = C1 or C3 = C2.

7. The method of claim 5, **characterized in that** the precoding matrices taken from different finite codebooks for performing the matrix product operation comprises at least one precoding matrix which is a diagonal matrix or an identity matrix.

8. The method of claim 4, **characterized in that** the first refined precoding matrix W1 and the second refined precoding matrix W2 are constructed for first and second finite codebooks respectively and are determined by the following formula:

$$W1 = a*C1 + b*C2 \text{ and } W2 = c*F1 + d*F2,$$

where F1 and F2 represent precoding matrices taken from a different finite codebook from that of C1 and C2 and c and d represent the scalar coefficients or the derivation of the scalar coefficients.

9. The method of claim 8, **characterized in that** the final precoding matrix $W_{final}$ is determined by the following formula:

$$W_{final} = W1 \cdot W2,$$

where symbol · represents the matrix product of the refined precoding matrices W1 and W2, and the matrix product is the Kronecker product, the Frobenius inner product, or the linear transformation of the matrix product operation.

10. The method of claim 1, **characterized in that** the one or more scalar coefficients is determined based on the set of indices of precoding matrices or the set of precoding matrices; or determined by calculating a projection of an optimal precoding matrix onto a subspace spanned by the set of indices of precoding matrices or the set of precoding matrices, wherein the projection is represented by a distance between the precoding matrices; or determined by directly performing a numerical search to minimize the matrix distance between the set of precoding matrices.

11. The method of claim 1, **characterized in that** each of the plurality of codebooks is predefined or configurable by the transmitter (200), the number of the scalar coefficients is predefined, and the number of indices for the set of indices of the precoding matrices is predefined.

12. A multiple-input multiple-output, MIMO, system (10), comprising:

a receiver (100), configured for obtaining downlink channel state information of a wireless channel, for selecting, for each of a plurality of codebooks, a set of indices of precoding matrices within codebooks according to the obtained downlink channel state information, and for transmitting, for each of the plurality of codebooks, the selected set of indices of precoding matrices and one or more scalar coefficients which are determined based on the selected set of indices of precoding matrices; and
a transmitter (200) coupled to the receiver (100), configured for receiving, for each of the plurality of codebooks, the selected set of indices of precoding matrices and one or more scalar coefficients which are determined based on the selected set of indices of precoding matrices, for generating at least a first and a second refined precoding matrix based on a different selected set of indices of precoding matrices for all of the finite codebooks and the determined one or more scalar coefficients, for generating a final precoding matrix based on at least the first refined precoding matrix and the second refined precoding matrix, and for applying the final precoding matrix to precode data signals to be transmitted from the transmitter (200) to the receiver (100) to reduce the quantization effect of precoding operations.

**13.** The system of claim 12, wherein the transmitter is adapted to generate the final precoding matrix by performing a specific matrix operation on the first refined precoding matrix and the second refined precoding matrix.

**14.** The system of claim 12, wherein the transmitter is a network/base station or user equipment and the receiver is a user equipment or network/base station.

**15.** A receiver (100) coupled to a transmitter (200) via a wireless channel in a multiple-input multiple-output, MIMO, wireless communication system, comprising:

a decoder (130), configured for obtaining downlink channel state information about the wireless channel, for selecting, for each of a plurality of codebooks, a set of indices of precoding matrices within codebooks according to the obtained downlink channel state information, and for transmitting, for each of the plurality of codebooks, the selected set of indices of precoding matrices and one or more scalar coefficients, which are determined based on the selected set of indices of precoding matrices, to the transmitter (200) via the wireless channel such that the transmitter (200), upon receiving the selected set of indices of precoding matrices and the determined one or more scalar coefficients, is able to generate at least a first and a second refined precoding matrix based on the different selected set of indices of precoding matrices and the determined one or more scalar coefficients, to generate a final precoding matrix based on at least the first refined precoding matrix and the second refined precoding matrix, and to apply the refined precoding matrix for transmission from the transmitter (200) to the receiver (100).

**Patentansprüche**

**1.** Ein Verfahren für drahtlose Kommunikation in einem MIMO System (10), MIMO = Multiple-Input Multiple-Output, zwischen einem Sender (200) und einem Empfänger (100), wobei das Verfahren Folgendes aufweist:

Erlangen von Downlink Kanalzustandsinformation auf einer Empfängerseite (S402);
Auswählen, für jedes einer Vielzahl von Codebooks, auch Codierbücher, eines Satzes von Indizes von Precodingmatritzen innerhalb des Codebooks gemäß der erlangten Downlink Kanalzustandsinformation auf der Empfängerseite (S404);
Senden, für jedes der Vielzahl von Codebooks, des ausgewählten Satzes von Indizes von Precodingmatritzen und einer oder mehrer Skalarkoeffizienten, die basierend auf dem ausgewählten Satz von Indizes von Precodingmatritzen bestimmt wurden, und zwar von dem Empfänger (100) an den Sender (200) (S406);
Generieren mindestens einer ersten und einer zweiten verfeinerten Precodingmatrix auf der Senderseite, wobei jede verfeinerte Precodingmatrix generiert wurde basierend auf einem unterschiedlich ausgewählten Satz von Indizes von Precodingmatritzen und dem bestimmten einen oder mehreren Skalarkoeffizienten (S408);
Generieren einer endgültigen Precodingmatrix basierend auf mindestens der ersten verfeinerten Precodingmatrix und der zweiten verfeinerten Precodingmatrix auf der Senderseite (S41 0); und
Anwenden der entgültigen Precodingmatrix zum Vorcodieren, auch Precodieren, von Datensignalen, die von dem Sender (200) an den Empfänger (100) zu senden sind, und zwar um den Quatisierungseffekt von Precodingoperationen zu reduzieren (S412).

**2.** Verfahren nach Anspruch 1, **dadurch gekennzeichnet, dass** der Schritt des Generierens der endgültigen Precodingmatrix ferner Generieren der entgültigen Precodingmatrix durch Durchführen einer spezifischen Matrixoperation mit der ersten verfeinerten Precodingmatrix und der zweiten verfeinerten Precodingmatrix aufweist.

**3.** Verfahren nach Anspruch 2, **dadurch gekennzeichnet, dass** der eine oder die mehreren Skalarkoeffizienten so ausgewählt werden, dass die entgültige Precodingmatrix gleich einer Precodingmatrix ist, die unter Nutzung einer Matrixoperation mit Precodingmatritzen von jedem der endlichen Codebooks berechnet wird.

4.  Verfahren nach Anspruch 1, **dadurch gekennzeichnet, dass** die erste oder die zweite verfeinerte Precodingmatrix durch folgende Formel bestimmt wird:

$$W = a*C1 + b*C2,$$

wobei W die verfeinerte Precodingmatrix repräsentiert, C1 und C2 den Satz von Precodingmatrizen repräsentieren, der aus dem gleichen endlichen Coodbook genommen wurde, und a und b die Skalarkoeffizienten oder einer Ableitung der Skalarkoeffizienten repräsentieren.

5.  Verfahren nach Anspruch 4, **dadurch gekennzeichnet, dass** der eine oder die mehreren Skalarkoeffizienten so ausgewählt werden, dass die erste oder die zweite verfeinerte Precodingmatrix gleich dem Matrixprodukt von Precodingmatritzen ist, die von unterschiedlichen endlichen Codebooks genommen wurde und durch die folgende Formel bestimmt wird:

$$W = a*C1 + b*C2 = C3 \cdot F1,$$

wobei C3 eine Precodingmatrix repräsentiert, die aus dem gleichen endlichen Codebook genommen wurde, wie dasjenige für C1 und C2, und F1 eine Precodingmatrix repräsentiert, die aus einem unterschiedlichen endlichen Codebook genommen wurde.

6.  Verfahren nach Anspruch 5, **dadurch gekennzeichnet, dass** C3 = C1 oder C3 = C2 gilt.

7.  Verfahren nach Anspruch 5, **dadurch gekennzeichnet, dass** die Precodingmatritzen, die von unterschiedlichen endlichen Codebooks zum Durchführen der Matrixproduktoperation genommen wurden, mindestens eine Precodingmatrix aufweisen, die eine Diagonalmatrix oder Indentitätsmatrix ist.

8.  Verfahren nach Anspruch 4, **dadurch gekennzeichnet, dass** die erste verfeinerte Precodingmatrix W1 und die zweite verfeinerte Precodingmatrix W2 für erste bzw. zweite endliche Codebooks erstellt wurden und durch folgende Formel bestimmt wurden:

$$W1 = a*C1 + b*C2 \text{ und } W2 = c*F1 + d*F2,$$

wobei F1 und F2 Precodingmatritzen repräsentieren, die von einem unterschiedlichen endlichen Codebook genommen wurden, als dasjenige für C1 und C2, und c und d die Skalarkoeffizienten oder die Ableitung der Skalarkoeffizienten repräsentieren.

9.  Verfahren nach Anspruch 8, **dadurch gekennzeichnet, dass** die entgültige Precodingmatrix W_final durch die folgende Formel bestimmt wird:

$$W_{final} = W1 \cdot W2,$$

wobei das Symbol •das Matrixpordukt der verfeinerten Precodingmatritzen W1 und W2 repräsentiert, und das Matrixprodukt das Kronecker Produkt, das Frobenius innere Produkt oder die Lineartransformation der Matrixproduktoperation ist.

10. Verfahren nach Anspruch 1, **dadurch gekennzeichnet, dass** die einen oder mehreren Skalarkoeffizienten bestimmt werden basierend auf dem Satz von Indizes von Precodingmatritzen oder auf dem Satz von Precodingmatritzen, oder bestimmt werden durch Berechnen einer Projektion einer optimalen Precodingmatrix auf einen Unterraum, der durch den Satz von Indizes von Precodingmatritzen oder dem Satz von Precodingmatritzen aufgespannt wird, wobei die Projektion durch eine Distanz zwischen den Precodingmatritzen repräsentiert wird, oder bestimmt wird durch direktes Ausführen einer numerischen Suche zum Minimieren der Matrixdistanz zwischen dem Satz von Precodingmatritzen.

11. Verfahren nach Anspruch 1, **dadurch gekennzeichnet, dass** jede der Vielzahl von Codebooks vordefiniert oder durch den Sender (200) konfigurierbar ist, die Anzahl von Skalarkoeffizienten vordefiniert ist und die Anzahl von Indizes für den Satz von Indizes der Precodingmatritzen vordefiniert ist.

12. Ein MIMO System (10), MIMO = Multiple-Input Multiple-Output, das Folgendes aufweist:

einen Empfänger (100), der konfiguriert ist zum Erlangen von Downlink Kanalzustandsinformation eines drahtlosen Kanals, und zwar zum Auswählen, für jedes einer Vielzahl von Codebooks, auch Codierbücher, eines Satzes von Indizes von Precodingmatritzen innerhalb von Codebooks entsprechend der erlangten Downlink Kanalzustandsinformation, und zum Senden, für jedes der Vielzahl von Codebooks, des ausgewählten Satzes von Indizes von Precodingmatritzen und einen oder mehreren Skalarkoeffizienten, die basierend auf dem ausgewählten Satz von Indizes von Precodingmatritzen bestimmt wurden, und
einen Sender (200), der an den Empfänger (100) angekoppelt ist, wobei der Sender konfiguriert zum: Empfangen, für jede der Vielzahl von Codebooks, des ausgewählten Satzes von Indizes von Precodingmatritzen und eines oder mehrere Skalarkoeffizienten, die basierend auf dem ausgewählten Satz von Indizes von Precodingmatritzen bestimmt wurden,
zum Generieren mindestens einer ersten und einer zweiten verfeinerten Precodingmatrix basierend auf einem unterschiedlich ausgewählten Satz von Indizes von Precodingmatritzen für alle der endlichen Codebooks und der bestimmten einen oder mehreren Skalarkoeffizienten, zum Generieren einer endgültigen Precodingmatrix basierend auf mindestens der ersten verfeinerten Precodingmatrix und der zweiten verfeinerten Precodingmatrix, und zum Anwenden der entgültigen Precodingmatrix zum Vorcodieren, auch Precoding, von Datensignalen, die von dem Sender (200) an den Empfänger (100) zu senden sind, und zwar um den Quatisierungseffekt von Precodingoperationen zu reduzieren.

13. System nach Anspruch 12, wobei der Sender angepasst ist zum Generieren der entgültigen Precodingmatrix durch Durchführen einer spezifischen Matrixoperation mit der ersten verfeinerten Precodingmatrix und der zweiten verfeinerten Precodingmatrix.

14. System nach Anspruch 12, wobei der Sender ein Netzwerk /Basisstation oder Nutzergerät, auch User Equipment, und der Empfänger ein Nutzergerät oder Netzwerk /Basisstation ist.

15. Ein Empfänger (100), der an einen Sender (200) über einen drahtlosen Kanal in einem MIMO drahtlosen Kommunikationssystem, MIMO = Multiple-Input Multiple-Output, angekoppelt ist, wobei der Empfänger Folgendes aufweist:

einen Decoder (130), der konfiguriert ist, und zwar zum Erlangen von Downlink Kanalzustandsinformation über den drahtlosen Kanal, zum Auswählen, für jede der Vielzahl von Codebooks, auch Kodierbüchern, eines Satzes von Indizes von Precodingmatritzen innerhalb von Codebooks entspechend der erlangten Downlink Kanalzustandsinformation, und zum Senden, für jede der Vielzahl von Codebooks, des ausgewählten Satzes von Indizes von Precodingmatritzen und einer oder mehrere Skalarkoeffizienten, die basierend auf dem ausgewählten Satz von Indizes von Precodingmatritzen bestimmt wurden, und zwar an den Sender (200) über den drahtlosen Kanal, so dass der Sender (200), beim Empfangen des ausgewählten Satzes von Indizes von Precodingmatritzen und der bestimmten einen oder mehreren Skalarkoeffizienten in der Lage ist, mindestens eine erste und eine zweite verfeinerte Precodingmatrix zu generieren, und zwar basieren auf den unterschiedlich ausgewählten Satz von Indizes von Precodingmatritzen und den bestimmten einen oder mehreren Skalarkoeffizienten, zum Generieren einer entgültigen Precodingmatrix basierend auf mindestens der ersten verfeinerten Precodingmatrix und der zweiten verfeinerten Precodingmatrix, und zum Anwenden der verfeinerten Precodingmatrix zum Senden von dem Sender (200) an den Empfänger (100).

**Revendications**

1. Procédé pour des communications sans fil dans un système à entrées multiples et à sorties multiples, MIMO, (10) entre un émetteur (200) et un récepteur (100), comprenant :

obtenir des informations d'état de canal de liaison descendante au niveau d'un côté récepteur (S402) ;

sélectionner, pour chacun d'une pluralité de livres de code, un ensemble d'indices de matrices de pré-codage dans des livres de code, conformément aux informations d'état de canal de liaison descendante obtenues au niveau du côté récepteur (S404) ;

émettre, pour chacun de la pluralité de livres de code, l'ensemble sélectionné d'indices de matrices de pré-codage et un ou plusieurs coefficients scalaires, qui sont déterminés sur la base de l'ensemble d'indices sélectionné de matrices de pré-codage, à partir du récepteur (100) vers l'émetteur (200) (S406) ;

générer au moins une première et une deuxième matrice de pré-codage affinées au niveau du côté émetteur, chaque matrice de pré-codage affinée étant générée sur la base d'un ensemble d'indices sélectionné différent de matrices de pré-codage et desdits un ou plusieurs coefficients scalaires déterminés (S408) ;

générer une matrice de pré-codage finale sur la base d'au moins la première matrice de pré-codage affinée et la deuxième matrice de pré-codage affinée au niveau du côté émetteur (S410) ; et

appliquer la matrice de pré-codage finale pour précoder des signaux de données à émettre à partir de l'émetteur (200) vers le récepteur (100) pour réduire les effets de quantification d'opérations de pré-codage (S412).

2. Procédé selon la revendication 1, **caractérisé en ce que** l'étape de génération de la matrice finale de pré-codage comprend en outre la génération de la matrice finale de pré-codage en réalisant une opération matricielle spécifique sur la première matrice de pré-codage affinée et la deuxième matrice de pré-codage affinée.

3. Procédé selon la revendication 2, **caractérisé en ce que** lesdits un ou plusieurs coefficients scalaires sont choisis de telle sorte que la matrice finale de pré-codage soit égale à une matrice de pré-codage calculée en utilisant une opération matricielle avec des matrices de pré-codage provenant de chacun des livres de code finis.

4. Procédé selon la revendication 1, **caractérisée en ce que** les première et deuxième matrices de pré-codage affinées sont déterminées par la formule suivante :

$$W = a*C1 + b*C2,$$

où W représente la matrice de pré-codage affinée, C1 et C2 représentent l'ensemble de matrices de pré-codage prises dans le même livre de code fini, et a et b représentent les coefficients scalaires ou une dérivée des coefficients scalaires.

5. Procédé selon la revendication 4, **caractérisé en ce que** lesdits un ou plusieurs coefficients scalaires sont choisis de telle sorte que la première ou la deuxième matrice de pré-codage affinée soit égale au produit matriciel de matrices de pré-codage prises dans des livres de code finis différents et soit déterminée par la formule suivante :

$$W = a*C1 + b*C2 = C3.F1,$$

où C3 représente une matrice de pré-codage prise dans le même livre de code fini que celui de C1 et C2, et F1 représente une matrice de pré-codage prise dans un livre de code fini différent.

6. Procédé selon la revendication 5, **caractérisé en ce que** C3 = C1 ou C3 = C2.

7. Procédé selon la revendication 5, **caractérisé en ce que** les matrices de pré-codage prises dans des livres de code finis différents pour réaliser l'opération de produit matriciel comprennent au moins une matrice de pré-codage qui est une matrice diagonale ou une matrice identité.

8. Procédé selon la revendication 4, **caractérisé en ce que** la première matrice de pré-codage affinée W1 et la deuxième matrice de pré-codage affinée W2 sont construites pour des premier et deuxième livres de code finis respectivement et sont déterminées par la formule suivante :

$$W1 = a*C1 + b*C2 \text{ et } W2 = c*F1 + d*F2,$$

où F1 et F2 représentent des matrices de pré-codage prises dans un livre de code fini différent de celui de C1 et C2, et c et d représentent les coefficients scalaires ou la dérivée des coefficients scalaires.

9. Procédé selon la revendication 8, **caractérisé en ce que** la matrice de pré-codage finale $W_{final}$ est déterminée par la formule suivante :

$$W_{final} = W1.W2,$$

où le symbole représente le produit matriciel des matrices de pré-codage affinées W1 et W2, le produit matriciel est le produit de Kronecker, le produit interne de Frobenius, ou la transformation linéaire de l'opération de produit matriciel.

10. Procédé selon la revendication 1, **caractérisé en ce que** lesdits un ou plusieurs coefficients scalaires sont déterminés sur la base de l'ensemble d'indices de matrices de pré-codage ou de l'ensemble de matrices de pré-codage ; ou déterminés en calculant la projection d'une matrice de pré-codage optimale sur un sous-espace couvert par l'ensemble d'indices de matrices de pré-codage ou l'ensemble de matrices de pré-codage, dans lequel la projection est représentée par une distance entre les matrices de pré-codage ; ou déterminée en réalisant directement une recherche numérique pour minimiser la distance matricielle entre matrices de l'ensemble de matrices de pré-codage.

11. Procédé selon la revendication 1, **caractérisé en ce que** chacun de la pluralité de livres de code est prédéfini ou configurable par l'émetteur (200), le nombre de coefficients scalaires est prédéfini, et le nombre d'indices de l'ensemble d'indices de matrices de pré-codage est prédéfini.

12. Système à entrées multiples et à sorties multiples, MIMO, (10), comprenant :

un récepteur (100), agencé pour obtenir des informations d'état de canal de liaison descendante d'un canal sans fil, pour sélectionner, pour chacun d'une pluralité de livres de code, un ensemble d'indices de matrices de pré-codage dans des livres de code conformément aux informations d'état de canal de liaison descendante obtenues, et pour transmettre, pour chacun de la pluralité de livres de code, l'ensemble sélectionné d'indices de matrices de pré-codage et un ou plusieurs coefficients scalaires qui sont déterminés sur la base de l'ensemble d'indices sélectionné de matrices de pré-codage ; et
un émetteur (200) couplé au récepteur (100), agencé pour recevoir, pour chacun de la pluralité de livres de code, l'ensemble d'indices sélectionné de matrices de pré-codage et un ou plusieurs coefficients scalaires qui sont déterminés sur la base de l'ensemble d'indices sélectionné de matrices de pré-codage, pour générer au moins une première et une deuxième matrice de pré-codage affinées sur la base d'un ensemble d'indices sélectionné différent de matrices de pré-codage pour tous les livres de code finis et lesdits un ou plusieurs coefficients scalaires déterminés, pour générer une matrice de pré-codage finale sur la base d'au moins la première matrice de pré-codage affinée et la deuxième matrice de pré-codage affinée, et pour appliquer la matrice de pré-codage finale au pré-codage de signaux de données à émettre à partir de l'émetteur (200) vers le récepteur (100) pour réduire les effets de quantification d'opérations de pré-codage.

13. Système selon la revendication 12, dans lequel l'émetteur est adapté à générer la matrice de pré-codage finale en réalisant une opération matricielle spécifique sur la première matrice de pré-codage affinée et la deuxième matrice de pré-codage affinée.

14. Procédé selon la revendication 12, dans lequel l'émetteur est un réseau/une station de base ou un équipement d'utilisateur et le récepteur est un équipement d'utilisateur ou un réseau/une station de base.

15. Récepteur (100) couplé à un émetteur (200) par l'intermédiaire d'un canal sans fil dans un système de communication sans fil à entrées multiples et à sorties multiples, MIMO, comprenant :

un décodeur (130), agencé pour obtenir des informations d'état de canal de liaison descendante concernant le canal sans fil, pour sélectionner, pour chacun d'une pluralité de livres de code, un ensemble d'indices de matrices de pré-codage dans des livres de code conformément aux informations d'état de canal de liaison descendante obtenues, et pour émettre, pour chacun de la pluralité de livres de code, l'ensemble sélectionné d'indices de matrices de pré-codage et un ou plusieurs coefficients scalaires, qui sont déterminés sur base de l'ensemble d'indices sélectionné de matrices de pré-codage, vers un émetteur (200) par l'intermédiaire du canal sans fil de telle sorte que l'émetteur (200), à la réception de l'ensemble d'indices sélectionné de matrices de pré-codage et desdits un ou plusieurs coefficients scalaires déterminés, est capable de générer au moins une première et une deuxième matrice de pré-codage affinées sur la base de l'ensemble d'indices sélectionné différent de matrices de pré-codage et desdits un ou plusieurs coefficients scalaires déterminés, pour générer une matrice de pré-codage finale sur la base d'au moins la première matrice de pré-codage affinée et la deuxième matrice de pré-codage affinée, et pour appliquer la matrice de pré-codage affinée pour une émission à partir de l'émetteur (200) vers le récepteur (100).

EP 2 400 705 B1

**10**

FIG. 1

FIG. 2

$F_{OPT}$

$F_1$

$F'=a_0F_1+(1-a_0)F_2$

$F_2$

FIG. 3

```
                    ( Start )
                        │
                        ▼
┌───────────────────────────────────────────┐
│ Obtain downlink channel state information  │ ─ S402
│ (CSI) of the wireless channel at a         │
│ receiver side                              │
└───────────────────────────────────────────┘
                        │
                        ▼
┌───────────────────────────────────────────┐
│ Select a set of indices of precoding       │
│ matrices from each of the first codebook   │
│ and the second codebook according to the   │ ─ S404
│ obtained downlink channel state            │
│ information and determine one or more       │
│ scalar coefficients at the receiver side   │
└───────────────────────────────────────────┘
                        │
                        ▼
┌───────────────────────────────────────────┐
│ Transmit the selected indices of first and │
│ second precoding matrices and the          │ ─ S406
│ determined scalar coefficient(s) from the  │
│ receiver to a transmitter                  │
└───────────────────────────────────────────┘
                        │
                        ▼
┌───────────────────────────────────────────┐
│ Generate a first refined precoding matrix  │
│ for the first codebook and a second        │
│ refined precoding matrix for the second    │
│ codebook at least based on the selected    │ ─ S408
│ indices of first and second precoding      │
│ matrices and the at least one scalar       │
│ coefficient(s) at the transmitter side     │
└───────────────────────────────────────────┘
                        │
                        ▼
┌───────────────────────────────────────────┐
│ Generate a final precoding matrix that is  │
│ to be combined with at least one data      │ ─ S410
│ signal at least based on the first and     │
│ second refined precoding matrices at the   │
│ transmitter side                           │
└───────────────────────────────────────────┘
                        │
                        ▼
┌───────────────────────────────────────────┐
│ Apply the final precoding matrix to data   │
│ signals to be transmitted between the      │ ─ S412
│ receiver and the transmitte                │
└───────────────────────────────────────────┘
                        │
                        ▼
                    ( End )
```

# FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009132601 A

**Non-patent literature cited in the description**

- Enhanced PMI Indication for Refining MIMO Precoder Codebook. 3GPP Draft, R1-101009. MOBILE COMPETENCE CENTRE, 17 February 2010